# EUROPEAN PATENT APPLICATION

(11) **EP 2 505 471 A1**
(43) Date of publication of application: **03.10.2012**
(21) Application number: 10833176.0
(22) Date of filing: 22.11.2010
(51) Int. Cl.: B62K 23/04, F02D 11/02, F02D 11/10

(54) **SADDLED VEHICLE**

(30) Priority: 24.11.2009 JP 2009266463
(71) Applicant: Yamaha Hatsudoki Kabushiki Kaisha, Iwata-shi, Shizuoka 438-8501 (JP)
(72) Inventor: SAKAI, Kouji, Iwata-shi Shizuoka 438-8501 (JP)
(74) Representative: Grünecker, Kinkeldey, Stockmair & Schwanhäusser
(86) International application number: PCT/JP2010/070817
(87) International publication number: WO 2011/065330

(57) **Abstract**

A motorcycle 10 includes an accelerator grip control 42. The accelerator grip control 42 includes a grip sleeve 44 provided rotatably around a handlebar 40; an accelerator grip member 46 fixed to the grip sleeve 44; a collar 50 fixed to the grip sleeve 44; an accelerator position sensor 58 which detects rotational positions of the accelerator grip member 46; a case member 52 which houses the collar 50 and the accelerator position sensor 58; and annular members 54 provided between the collar 50 and the accelerator position sensor 58. The annular members 54 have outer circumferential portions 60a in contact with the case member 52 along their entire circumferences, and the annular members 54 have inner circumferential portions 60c in contact with the collar 50 along their entire circumferences.

## Description

### TECHNICAL FIELD

The present invention relates to saddle type vehicles, and more specifically to a saddle type vehicle including an accelerator position sensor.

### BACKGROUND ART

Conventionally, saddle type vehicles (such as a motorcycle) is provided with an accelerator grip control to allow the rider to manually control acceleration operations. The accelerator grip control includes an accelerator grip member which is rotatable with respect to the handlebar. The accelerator grip member is connected with a throttle valve mechanically by means of an accelerator cable for example. Thus, the accelerator grip member's rotational position determines the throttle valve's degree of opening, achieving an adjustment on the volume of air taken into the engine. As a result, an adjustment is made on the engine output.

The accelerator cable includes, for example, a cable main body and a cover through which the cable main body is inserted. The cover, which is made of a resin material for example, guides the cable main body while protecting the cable main body. In such an accelerator cable as the above, the accelerator cable is bent as the rider operates the handlebar for example, and when this happens, there is a change in frictional force between the cable main body and the cover. This will change operation feeling of the accelerator grip member, which can give a sense of inconsistency to the rider.

To solve this, proposals have been made in recent years for accelerator grip controls provided with accelerator position sensors in place of the accelerator cables, for detecting the accelerator grip member's rotational positions (see Patent Document 1 for example). When using such an accelerator grip control, the saddle type vehicle is provided with an actuator for varying the throttle valve's degree of opening. The actuator is driven, based on electric signals from the accelerator position sensor outputted in accordance with the accelerator grip member's rotational positions. Thus, the accelerator grip member's rotational position determines the throttle valve's degree of opening, achieving an adjustment on the engine output.

Patent Document 1 discloses a handlebar grip control, which includes a grip main body, a tube guide, detection means, a return spring and a resistance addition means. The tube guide is rotatable with respect to a handlebar pipe. The grip main body is fixed to the tube guide, to rotate integrally with the tube guide. The detection means outputs electric signals in accordance with the grip main body's rotational positions. The return spring gives the tube guide a force to rotate the tube guide in one direction. The resistance addition means has a slider which is in contact with part of the tube guide' s outer circumferential surface, and urging means which presses the slider onto the tube guide. The resistance addition means applies a load based on a frictional force to the tube guide as a resistance to the rotation of the tube guide.
Patent Document 1: JP-A 2002-264876

### SUMMARY OF THE INVENTION

### PROBLEMS TO BE SOLVED BY THE INVENTION

According to the handlebar grip control disclosed in Patent Document 1, the slider is in contact with only part of the outer circumferential surface of the tube guide in the tube guide's circumferential direction. Therefore, when the tube guide rotates with respect to the handlebar pipe, the region of contact between the tube guide' s outer circumferential surface and the slider moves in a circumferential direction of the tube guide. In this case, a frictional force generated in the region of contact between the tube guide and the slider changes irregularly, so the resistance to the tube guide's rotation changes irregularly. This can give a sense of inconsistency to the rider.

Also, in the handlebar grip control according to Patent Document 1, a frictional force generated between the slider and the tube guide changes if the tube guide becomes eccentric to the handlebar pipe during the rider' s operation of the grip main body. Specifically, if the tube guide moves toward the slider, the frictional force generated between the tube guide and the slider is increased largely. This results in large increase in the resistance to the tube guide rotation. On the other hand, if the tube guide moves away from the slider, the frictional force generated between the tube guide and the slider is decreased largely. This results in large decrease in the resistance to the tube guide rotation. As understood, according to the handlebar grip control disclosed in Patent Document 1, there is a large change in the resistance to the tube guide rotation if the tube guide becomes eccentric to the handlebar pipe. This can give a sense of inconsistency to the rider.

Therefore, a primary object of the present invention is to provide a saddle type vehicle capable of reducing the change in resistance to the rotation of the accelerator grip member.

### MEANS FOR SOLVING THE PROBLEMS

According to an aspect of the present invention, there is provided a saddle type vehicle including a fixing member having a handlebar; a rotating member rotatable around the handlebar and having an accelerator grip member and a support member supporting the accelerator grip member so that the accelerator grip member can rotate with respect to the handlebar; an accelerator position sensor for outputting electric signals in accordance with rotational positions of the accelerator grip member; and an annular member as a separate element from the support member, for applying a load based on a frictional force to the rotating member as a resistance to rotation of the rotating member. With the above-described arrangement, the annular member has an outer circumferential portion in contact with one of the fixing member and the rotating member whereas the annular member has an inner circumferential portion in contact with the other of the fixing member and the rotating member.

According to the present saddle type vehicle, a rotating member includes an accelerator grip member and a support member, and is provided rotatably around a handlebar of a fixing member. An annular member gives the rotating member a load based on a frictional force as a resistance to the rotation of the rotating member. The annular member has an outer circumferential portion, which is in contact with one of the fixing member and the rotating member whereas the annular member has an inner circumferential portion, which is in contact with the other of the fixing member and the rotating member. With the arrangement described as the above, when the rider operates the accelerator grip member and rotates the rotating member, the annular member starts sliding with respect to the rotating member or the fixing member. During this, a dynamic frictional force is generated in the region of contact between the annular member and the fixing member or in the region of contact between the annular member and the rotating member, and the generated dynamic frictional force acts as a resistance to the rotation of the rotating member.

In the present saddle type vehicle, an annular member is used as means for generating the resistance to the rotation of the rotating member. With this arrangement, it is easy to make the annular member's outer circumferential portion in contact with the fixing member or with the rotating member along its entire circumference. Also, the arrangement makes it possible to easily make the annular member's inner circumferential portion in contact with the fixing member or with the rotating member along its entire circumference. In this case, it is possible, when the outer circumferential portion of the annular member slides with respect to the fixing member or the rotating member, to keep the outer circumferential portion of the annular member in contact with the fixing member or the rotating member along its entire circumference. This makes it possible to reduce irregular changes in the dynamic frictional force generated in the region of contact between the annular member and the fixing member, or in the region of contact between the annular member and the rotating member. Likewise, it is possible, when the inner circumferential portion of the annular member slides with respect to the fixing member or the rotating member, to keep the inner circumferential portion of the annular member in contact with the fixing member or the rotating member along its entire circumference. This makes it possible to reduce irregular changes in the dynamic frictional force generated in the region of contact between the annular member and the fixing member, or in the region of contact between the annular member and the rotating member. As a result of these, it is possible to reduce irregular changes in the load applied from the annular member to the rotating member, and therefore to reduce irregular changes in the resistance to the rotation of the accelerator grip member. Therefore, the rider can operate the accelerator grip member without having a feeling of inconsistency.

Also, in the present saddle type vehicle, the annular member and the rotating member are in contact with each other, so if the rider' s operation on the accelerator grip member has caused the rotating member to become eccentric to the handlebar, the force which is applied from the rotating member to the annular member increases in part of the annular member. As a result, the frictional force generated between the annular member and the rotating member or between the annular member and the fixing member increases near that part of the annular member. However, the other part of the annular member receives a reduced amount of force, resulting in reduced change in the total amount of frictional force generated in the region of contact between the annular member and the rotating member or in the region of contact between the annular member and the fixing member. As described, according to the present saddle type vehicle, it is possible to reduce changes in the frictional force generated in the region of contact between the annular member and the rotating member or in the region of contact between the annular member and the fixing member even if the rotating member becomes eccentric to the handlebar. Therefore, it is possible to reduce changes in the resistance to the rotation of the accelerator grip member. Therefore, the rider can operate the accelerator grip member without having a feeling of inconsistency.

Preferably, the annular member includes a contact member which is in contact with the fixing member and with the rotating member, and a core member buried in the contact member. In this case, it is possible, by burying the core member into the outer circumferential portion of the annular member for example, to press the outer circumferential portion of the annular member by the core member, onto the fixing member or the rotating member. The arrangement makes it possible to prevent the outer circumferential portion of the annular member from slipping with respect to the fixing member or to the rotating member, thereby achieving stable sliding of the inner circumferential portion of the annular member with respect to the rotating member or to the fixing member. As a result, it is possible to sufficiently prevent irregular changes in the dynamic frictional force generated in the region of contact between the inner circumferential portion of the annular member and the rotating member or in the region of contact between the inner circumferential portion of the annular member and the fixing member. On the other hand, it is also possible, by burying the core member into the inner circumferential portion of the annular member for example, to press the inner circumferential portion of the annular member by the core member, onto the fixing member or the rotating member. The arrangement makes it possible to prevent the inner circumferential portion of the annular member from slipping with respect to the fixing member or to the rotating member, thereby achieving stable sliding of the outer circumferential portion of the annular member with respect to the rotating member or to the fixing member. As a result, it is possible to sufficiently prevent irregular changes in the dynamic frictional force generated in the region of contact between the outer circumferential portion of the annular member and the rotating member or in the region of contact between the outer circumferential portion of the annular member and the fixing member.

Further preferably, the annular member includes a contact member which is in contact with the fixing member and with the rotating member, and a tightening member tightening an inner circumferential portion of the contact member. In this case, it is possible, by using the tightening member, to make stable contact of the inner circumferential portion of the contact member with the fixing member or the rotating member. As a result, it is possible to sufficiently prevent irregular changes in the dynamic frictional force generated in the region of contact between the inner circumferential portion of the contact member and the fixing member or in the region of contact between the inner circumferential portion of the contact member and the rotating member.

Further preferably, the annular member includes a contact member which is in contact with the fixing member and with the rotating member. With this arrangement, the contact member includes a viscoelastic polymer material. At an early stage of rotation of the rotating member, the contact member is pulled by the rotating member with a static frictional force generated in the region of contact between the contact member and the rotating member, and the contact member is deformed. As the rotating member rotates further, the contact member starts sliding with respect to the fixing member or to the rotating member, upon which the frictional force in the region of contact between the contact member and the fixing member or in the region of contact between the contact member and the rotating member changes from a static frictional force to a dynamic frictional force. Since the dynamic frictional force is smaller than the static frictional force, the frictional force generated in the region of contact decreases when the contact member starts sliding with respect to the fixing member or to the rotating member. Therefore, there is a decrease in the force which is applied from the rotating member to the contact member, which decreases the amount of deformation in the contact member. The frictional force generated in the region of contact between the contact member and the fixing member or in the region of contact between the contact member and the rotating member acts as a resistance to the rotation of the rotating member (the accelerator grip member). Since the dynamic frictional force is smaller than the static frictional force as mentioned above, the resistance to the rotation of the rotating member decreases when the contact member starts sliding with respect to the fixing member or to the rotating member. If there is a rapid decrease in the resistance to the rotation of the rotating member, there is a change in operational feeling on the accelerator grip member, which will give a sense of inconsistency to the rider. According to the present saddle type vehicle, however, the contact member includes a viscoelastic polymer material and therefore, even if the frictional force in the region of contact between the contact member and the fixing member or in the region of contact between the contact member and the rotating member changes from a static frictional force to a dynamic frictional force, the amount of deformation in the contact member does not decrease rapidly. In this case, the dynamic frictional force generated in the region of contact between the contact member and the fixing member or in the region of contact between the contact member and the rotating member decreases slowly, so the resistance to the rotation of the accelerator grip member also decreases slowly. Therefore, it is possible to prevent a change in operational feeling of the accelerator grip member. Also, since the dynamic frictional force decreases slowly, it is possible to prevent a stick-slip phenomenon. As a result of these, the rider is able to operate the accelerator grip member comfortably.

Further, preferably, the saddle type vehicle further includes a return spring which applies a force for rotating the rotating member in one direction, to the rotating member. In this case, the arrangement makes it possible to keep the accelerator grip member at its initial position when the rider is not operating the accelerator grip member.

Further preferably, the support member includes a substantially cylindrical sliding bearing. In this case, the arrangement makes it possible to reduce the size of the support member.

Further preferably, the fixing member includes a case member which houses the accelerator position sensor. In this case, it is possible to protect the accelerator position sensor with the case member.

Further, preferably, the saddle type vehicle further includes a supplying member which is provided in the case member and supplies the annular member with a lubricant. In this case, it is possible to keep the annular member in good contact with the fixing member or the rotating member for an extended period of time.

Further, preferably, the saddle type vehicle includes a pair of the annular members in the case member, and the supplying member is provided between the pair of the annular members. In this case, it is possible to supply the lubricant uniformly to the pair of annular members.

Further, preferably, the case member has a vent hole for communication between an inside space and an outside space of the case member. In this case, it is possible to prevent a problem that pressure in the inside space of the case member will increase or decrease with respect to the pressure in the outside space. The arrangement prevents deformation of the fixing member, the rotating member and the annular member, ensuring stable contact of the annular member with the fixing member and the rotating member.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a motorcycle according to an embodiment of the present invention.
Fig. 2 is a plan view showing a right side portion of a handle.
Fig. 3 is a cross-sectional view of the handle in Fig. 2.
Fig. 4 is a block diagram of a motorcycle control system.
Fig. 5 is an illustrative sectional diagram showing a relationship between a handlebar, a collar, a case member, and an annular member.
Fig. 6 is a graph showing a conceptual relationship between an accelerator grip member's rotational positions and the rotational moment acting on the accelerator grip member.
Fig. 7 includes illustrative side views showing the handlebar, the collar, the case member, and the annular member.
Fig. 8 is a diagram showing how the rotational moment on the accelerator grip member given by a rider' s operation will change.
Fig. 9 is an illustrative diagram showing another example of an accelerator grip control.
Fig. 10 is an illustrative diagram showing still another example of the accelerator grip control.
Fig. 11 is an illustrative diagram showing an example of an accelerator grip control in which annular members are disposed between the handlebar and a collar.
Fig. 12 is an illustrative diagram showing another example of the accelerator grip control in which an annular member is disposed between the handlebar and the collar.
Fig. 13 is an illustrative diagram showing an example of an accelerator grip control in which annular members are provided outside of the case member.
Fig. 14 includes diagrams showing variations of a contact member.

### LEGEND

- 10: Motorcycle
- 18: Handle
- 25: Controller
- 30: Electronic throttle control
- 40: Handlebar
- 42, 42a, 42b, 42c, 42d, 42e: Accelerator grip controls
- 44, 94: Grip sleeves
- 46, 96: Accelerator grip members
- 50, 82: Collars
- 52, 66: Case members
- 54, 54a, 54b, 54c, 76, 76a, 76b, 104, 106: Annular members
- 56: Coil spring
- 58: Accelerator position sensor
- 60, 78, 84, 88, 100, 104a, 106a: Contact members
- 62, 80, 86, 90, 102: Core members
- 64, 92: Tightening members
- 70: Supplying member
- 74: Vent hole
- F, F1: Fixing members
- R, R1, R2: Rotating members
- S1, S2: Spaces

### BEST MODE FOR CARRYING OUT THE INVENTION

Hereinafter, embodiments of the present invention will be described with reference to the drawings.
Herein, description will be made for a motorcycle as a saddle type vehicle according to the present invention.

It should be noted here that the terms right and left, front and rear, up and down as used in this embodiment are determined from the rider's position on a seat of a motorcycle 10, with the rider facing toward a handle.

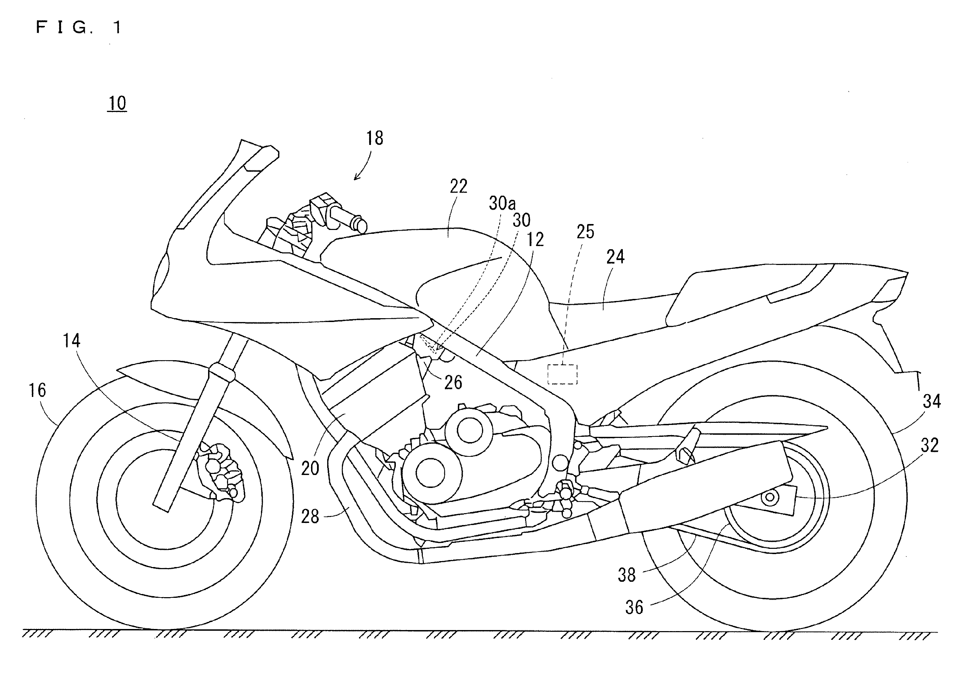

Referring to Fig. 1, the motorcycle 10 includes a head pipe (not illustrated) and a main frame 12 extending obliquely rearward and downward from the head pipe. The head pipe rotatably supports a steering shaft (not illustrated). The steering shaft has a lower end portion, where a front fork 14 is attached. The front fork 14 has a lower end portion, which supports a front wheel 16 rotatably. The steering shaft has an upper end portion, where a handle 18 is attached.

An engine 20 and a fuel tank 22 are fixed to the main frame 12. The engine 20 is disposed below the main frame 12 whereas the fuel tank 22 is disposed above the main frame 12. A seat 24 is provided behind the fuel tank 22. A controller 25 is provided below the seat 24. The controller 25 consists of, for example, a central processing unit (CPU), a memory, etc.

The engine 20 is connected with an air-intake pipe 26 as well as an exhaust pipe 28. The air-intake pipe 26 is provided with an electronic throttle control 30. The electronic throttle control 30 includes a throttle valve 30a which adjusts the amount of air taken into the engine 20; and an actuator (not illustrated) which adjusts the degree of opening of the throttle valve 30a. The actuator includes an electric motor for example.

The main frame 12 has a lower end portion, which supports a swing arm 32 pivotably. The swing arm 32 has a rear end portion, which supports a rear wheel 34 rotatably. The rear wheel 34 is provided with a driven sprocket 36 which rotates integrally with the rear wheel 34. The driven sprocket 36 is connected with a drive sprocket (not illustrated) of the engine 20 via an endless chain 38. Power generated in the engine 20 is transmitted to the rear wheel 34 via the drive sprocket, the chain 38 and the driven sprocket 36. Thus, the motorcycle 10 can travel.

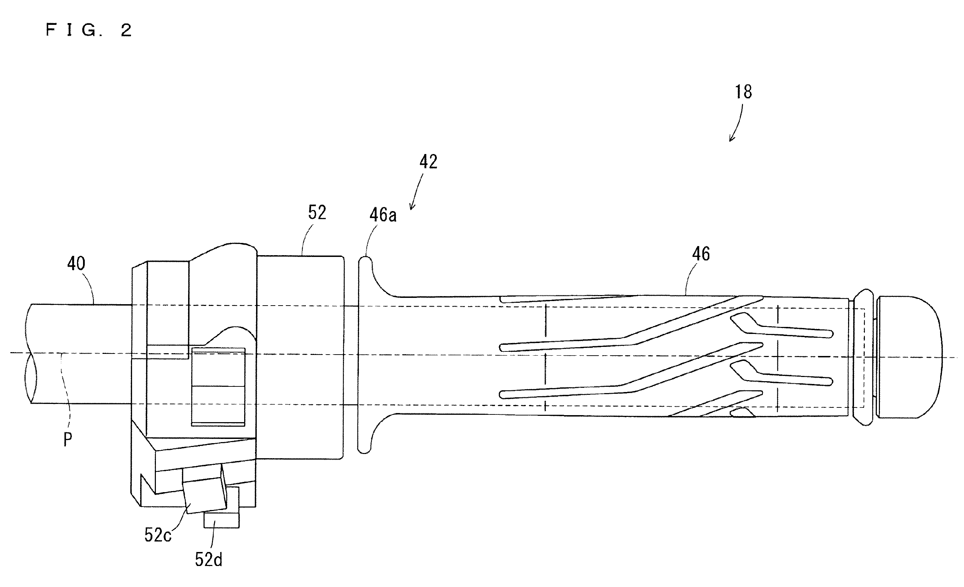

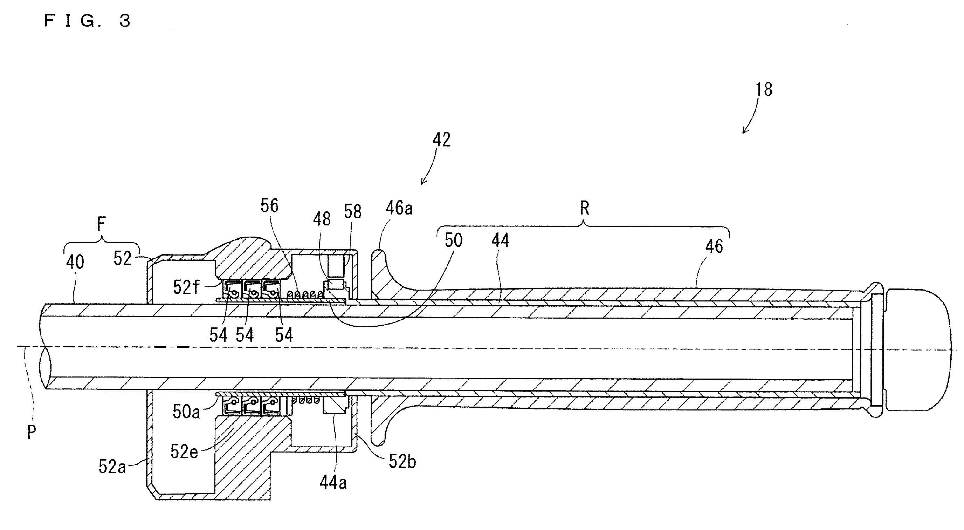

Fig. 2 is a plan view showing a right-side portion of the handle 18 whereas Fig. 3 is a cross-sectional view of the handle 18 in Fig. 2.

Referring to Fig. 2 and Fig. 3, the handle 18 includes a substantially cylindrical handlebar 40, and an accelerator grip control 42 provided on the handlebar 40. The handlebar 40 is attached to the above-mentioned steering shaft (not illustrated), extending in the left-right direction. Referring to Fig. 3, the accelerator grip control 42 includes a grip sleeve 44, an accelerator grip member 46, a magnet 48, a collar 50, a case member 52, a plurality (three in the present embodiment) of annular members 54, a coil spring 56, and an accelerator position sensor 58. In the present embodiment, the handlebar 40 and the case member 52 provide a fixing member F whereas the grip sleeve 44, the accelerator grip member 46 and the collar 50 provide a rotating member R.

The grip sleeve 44 is substantially cylindrical, and is provided rotatably around the handlebar 40. Specifically, the grip sleeve 44 is fitted around the handlebar 40, slidably with respect to the handlebar 40. The grip sleeve 44 is made of a resin or a metal, for example. Examples of the resin for forming the grip sleeve 44 include nylon, fluororesin, or polytetrafluoroethylene (PTFE).

The grip sleeve 44 includes an annular flange portion 44a at its left end portion. The accelerator grip member 46 is substantially cylindrical, and is fixed to an outer circumferential surface of the grip sleeve 44, at a more right-side position than the flange portion 44a. With this arrangement, the accelerator grip member 46 is rotatable around the handlebar 40 integrally with the grip sleeve 44. Specifically, the grip sleeve 44 supports the accelerator grip member 46 rotatably with respect to the handlebar 40. As understood, the grip sleeve 44 serves as a sliding bearing. The accelerator grip member 46 includes a flange portion 46a at its left end portion. The accelerator grip member 46 is rotated by the rider for controlling an output of the engine 20.

The magnet 48 is fixed onto an outer circumferential surface of the flange portion 44a. With this arrangement, the magnet 48 is rotatable about a center axis P of the handlebar 40, integrally with the grip sleeve 44 and the accelerator grip member 46.

The collar 50 is cylindrical, and is fixed to a left end portion of the grip sleeve 44. The collar 50 is coaxial with the grip sleeve 44. With this arrangement, the collar 50 is rotatable about the center axis P of the handlebar 40, integrally with the grip sleeve 44. Therefore, in this accelerator grip control 42, as the rider rotates the accelerator grip member 46, then the accelerator grip member 46, the grip sleeve 44, the magnet 48 and the collar 50 rotate integrally with each other with respect to the handlebar 40. The collar 50 has an inner diameter which is greater than an outer diameter of the handlebar 40, and there is a small gap provided between an inner circumferential surface of the collar 50 and an outer circumferential surface of the handlebar 40. The grip sleeve 44 and the collar 50 can be fixed with each other by pressing a right end portion of the collar 50 into the flange portion 44a for example. Also, the right end portion of the collar 50 may be adhesively fixed to the inner circumferential surface of the flange portion 44a.

The case member 52 is hollow, and is fixed to the handlebar 40 at a more left-side position than the accelerator grip member 46. Specifically, the case member 52 has its left side wall portion 52a fixed to the outer circumferential surface of the handlebar 40. It should be noted here that the case member 52 has a right side wall portion 52b, which is not fixed to an outer circumferential surface of the grip sleeve 44. Thus, the grip sleeve 44 is rotatable with respect to the case member 52. The flange portion 44a of the grip sleeve 44, the magnet 48, the collar 50, the annular members 54, the coil spring 56 and the accelerator position sensor 58 are housed in the case member 52.

Referring to Fig. 2, the case member 52 is provided with switches 52c, 52d. The switch 52c is for starting the engine 20 for example whereas the switch 52d is for activating flashers for example.

Referring to Fig. 3, the case member 52 has an inward-protruding annular projection 52e. The projection 52e is substantially at a central portion of the case member 52 in terms of the left-right direction. The projection 52e has an inner circumferential surface 52f which has a circular section. The annular members 54 are attached to the projection 52e between the collar 50 and the projection 52e, axially of the collar 50 (the handlebar 40). The annular members 54 will be detailed later.

The coil spring 56 is provided between the flange portion 44a of the grip sleeve 44 and the annular members 54, coaxially with the collar 50. The coil spring 56 has its one end portion (right end portion in the present embodiment) connected with the flange portion 44a while the coil spring 56 has another end portion (left end portion in the present embodiment) connected with the case member 52. The coil spring 56 urges the grip sleeve 44 for rotation of the grip sleeve 44 and the accelerator grip member 46 in a specific direction with respect to the handlebar 40. The specific direction is the direction in which the accelerator grip member 46 is closed. In other words, this is a direction to bring the accelerator grip member 46 to its initial position. The initial position of the accelerator grip member 46 is a position of the accelerator grip member 46 where the accelerator grip member 46 has a zero degree of opening. As understood, the coil spring 56 serves as a return spring for the accelerator grip member 46.

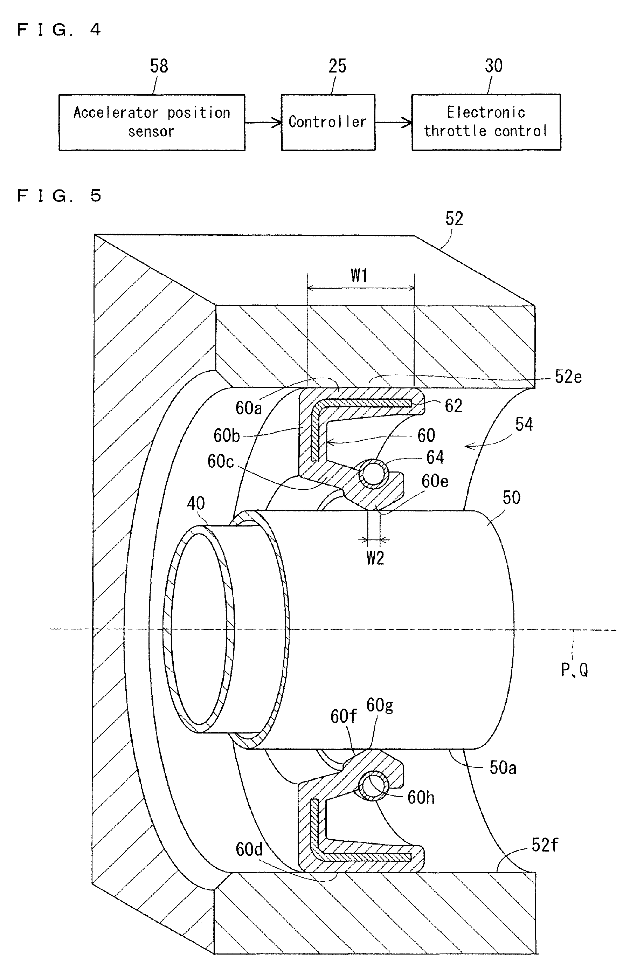

The accelerator position sensor 58 is provided radially of the magnet 48, on an inner circumferential surface of the case member 52, and detects a position of the magnet 48. The accelerator position sensor 58 includes a Hall IC for example, and detects magnetic flux change thereby detecting the position of the magnet 48. Referring to Fig. 4, the accelerator position sensor 58 outputs electric signals in accordance with the position of the magnet 48 (see Fig. 3), to the controller 25. Now, as has been described earlier, the magnet 48 (see Fig. 3) rotates integrally with the accelerator grip member 46 (see Fig. 3). Therefore, the electric signals outputted from the accelerator position sensor 58 to the controller 25 correspond to rotational positions of the accelerator grip member 46 (see Fig. 3) with respect to the handlebar 40 (see Fig. 3). Based on the electric signals sent from the accelerator position sensor 58, the controller 25 drives the actuator (not illustrated) of the electronic throttle control 30. This controls the degree of opening in the throttle valve 30a (see Fig. 1) of the electronic throttle control 30, thereby controlling the output of the engine 20. Specifically, the output of the engine 20 is controlled in accordance with the amount of operation on the accelerator grip member 46 by the rider.

Next, a configuration of the annular member 54 will be described in detail. Fig. 5 is an illustrative sectional diagram showing a relationship between the handlebar 40, the collar 50, the case member 52, and the annular member 54. It should be noted here that in order to avoid complication in the drawing, Fig. 5 shows only one of the three annular members 54. The other two annular members 54 which are not shown in Fig. 5 also have the same configuration as the one shown in Fig. 5.

Referring to Fig. 5, the annular member 54 has a center axis Q which is identical with the center axis P of the handlebar 40. Specifically, the annular member 54 is coaxial with the handlebar 40 and the grip sleeve 44. The annular member 54 includes an annular contact member 60, an annular core member 62, and an annular tightening member 64.

The contact member 60 is made, for example, of a viscoelastic polymer material which is a material possessing elasticity and viscosity. The viscoelastic polymer material includes rubber in a broad sense, for example. More specifically, viscoelastic polymer material includes, for example, synthetic rubbers obtainable by addition polymerization or copolymerization, thermoplastic elastomers, etc. The above mentioned synthetic rubbers include, for example, nitrile rubber, acrylic rubber, silicone rubber, fluorine-containing rubber, chloroprene rubber, urethane rubber, ethylene-propylene-diene (EPDM) rubber, etc.

The contact member 60 has a substantially U-shaped section. Specifically, the contact member 60 includes a cylindrical outer circumferential portion 60a, an annular side wall portion 60b extending from a left end portion of the outer circumferential portion 60a toward the center axis Q, and a substantially cylindrical inner circumferential portion 60c extending from an inner edge of the side wall portion 60b to the right with a slight tilt toward the center axis Q. The outer circumferential portion 60a has an outer circumferential surface 60d which has a circular section. The outer circumferential surface 60d is in contact with the inner circumferential surface 52f of the projection 52e along its entire circumference. The inner circumferential portion 60c has a right end portion 60e, where an inner circumferential surface 60f has a pointed, substantially V-shaped section toward the center axis Q. The inner circumferential surface 60f has a pointed end portion 60g, which is in contact with the outer circumferential surface 50a of the collar 50 along its entire circumference.

The core member 62 is made, for example, of a harder material than the contact member 60. The core member 62 is made of a metal for example. The core member 62 has an L-shaped section. The core member 62 is buried into the outer circumferential portion 60a and the side wall portion 60b of the contact member 60. The arrangement provides reinforcement to the contact member 60 thereby improving strength of the contact member 60. The contact member 60 can be bonded to the core member 62 by means of baking for example.

It should be noted here that when the annular member 54 is not attached to the projection 52e, the outer circumferential portion 60a has a slightly greater outer diameter than an inner diameter of the projection 52e. Thus, when the annular member 54 is attached to the projection 52e, the outer circumferential portion 60a is clamped by the projection 52e and the core member 62, whereby the outer circumferential portion 60a comes under compression deformation. Under this state, the core member 62 presses the outer circumferential portion 60a onto the inner circumferential surface 52f of the projection 52e with a sufficient pressure. The arrangement makes it possible to have a sufficiently large maximum static frictional force between the outer circumferential surface 60d of the contact member 60 and the inner circumferential surface 52f of the case member 52. As a result, it is possible to fix the annular members 54 to the case member 52. This also makes it possible to sufficiently prevent the outer circumferential surface 60d of the contact member 60 from slipping with respect to the inner circumferential surface 52f of the case member 52.

The tightening member 64 includes a garter spring for example. The garter spring is a closed coil spring, with two ends thereof connected with each other to make an annular member. The garter spring is used as a tightening spring. The tightening member 64 is attached to a right end portion 60e of the inner circumferential portion 60c, to tighten the right end portion 60e of the inner circumferential portion 60c to the collar 50. Specifically, the tightening member 64 is attached to a groove 60h formed at the right end portion 60e of the inner circumferential portion 60c so as to surround the right end portion 60e of the inner circumferential portion 60c from a radially outside direction. In this arrangement, the pointed end portion 60g of the inner circumferential portion 60c is pressed onto the outer circumferential surface 50a of the collar 50 with an appropriate amount of force. As a result, it is possible to generate an appropriate amount of frictional force along the region of contact between the pointed end portion 60g of the inner circumferential portion 60c and the outer circumferential surface 50a of the collar 50.

It should be noted here that preferably, when the annular member 54 is not fitted around the collar 50, the inner circumferential portion 60c has a minimum diameter (inner diameter of the inner circumferential portion 60c at the pointed end portion 60g) slightly smaller than an outer diameter of the collar 50. In this case, it is possible to cause the pointed end portion 60g to make contact with the outer circumferential surface 50a of the collar 50 while the inner circumferential portion 60c is under an appropriate compression deformation.

In its axial direction of the contact member 60, the region of contact between the outer circumferential surface 60d of the contact member 60 and the inner circumferential surface 52f of the case member 52 has a sufficiently greater width W1 than a width W2 in the region of contact between the inner circumferential surface 60f of the contact member 60 and the outer circumferential surface 50a of the collar 50. Therefore, the area of contact between the outer circumferential surface 60d and the inner circumferential surface 52f is sufficiently larger than the area of contact between the inner circumferential surface 60f and the outer circumferential surface 50a. In the accelerator grip control 42, the contact member 60 is made of a viscoelastic polymer material. Therefore, it is possible to increase the frictional force to be generated in the region of contact between the outer circumferential surface 60d of the contact member 60 and the inner circumferential surface 52f of the projection 52e by increasing the area of contact. Therefore, in the accelerator grip control 42, it is possible to make a sufficiently larger maximum static frictional force in the region of contact between the outer circumferential surface 60d and the inner circumferential surface 52f than a maximum static frictional force in the region of contact between the inner circumferential surface 60f and the outer circumferential surface 50a.

Next, description will cover a function of the coil spring 56 and the annular members 54 when the rider is operating the accelerator grip member 46. As described earlier, the coil spring 56 serves as a return spring. Therefore, any time the rider is operating the accelerator grip member 46, the coil spring 56 is giving the accelerator grip member 46 a force to bring the accelerator grip member 46 to its initial position. Also, when the rider is operating the accelerator grip member 46, the outer circumferential surface 50a of the collar 50 is rotating while sliding with respect to the annular members 54. This generates a dynamic frictional force in the regions of contact between the outer circumferential surface 50a of the collar 50 and the inner circumferential surfaces 60f (the pointed end portions 60g) of the annular members 54. Specifically, as the rider operates the accelerator grip member 46, the annular members 54 apply a load based on a frictional resistance, to the collar 50. The load given by the annular members 54 to the collar 50 is then passed through the grip sleeve 44, and to the accelerator grip member 46. Therefore, in the accelerator grip control 42, the dynamic frictional force generated in the region of contact between the outer circumferential surface 50a of the collar 50 and the inner circumferential surfaces 60f of the annular members 54 is given to the accelerator grip member 46, as a resistance to the rotation of the accelerator grip member 46. Hereinafter, the function of the coil spring 56 and the annular members 54 will be described in more detail with reference to the drawings.

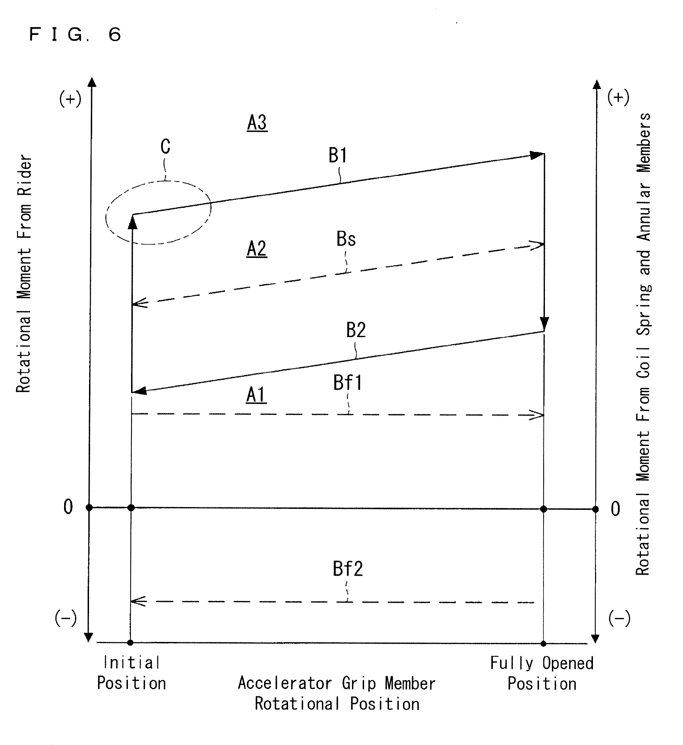

Fig. 6 is a graph showing a conceptual relationship between rotational positions of the accelerator grip member 46 and the rotational moment acting on the accelerator grip member 46. The relationship in Fig. 6 assumes that the accelerator grip member 46 is rotated at a constant rate. In Fig. 6, the horizontal axis represents rotational positions of the accelerator grip member 46. The left-side vertical axis in Fig. 6 represents the amount of rotational moment given to the accelerator grip member 46 from the rider' s operation. On the left-side vertical axis, the rotational moment acting in the opening direction of the accelerator grip member 46 is positive (+) whereas the rotational moment acting in the closing direction of the accelerator grip member 46 is negative (-). The right-side vertical axis in Fig. 6 represents the amount of rotational moment given to the accelerator grip member 46 from the coil spring 56 and the annular members 54. On the right-side vertical axis, the rotational moment acting in the closing direction of the accelerator grip member 46 is positive (+) whereas the rotational moment acting in the opening direction of the accelerator grip member 46 is negative (-). Regions A1, A2, A3 are those corresponding to the left-side vertical axis whereas broken lines Bs, Bf1, Bf2 and solid lines B1 and B2 are those corresponding to the right-side vertical axis.

In Fig. 6, the broken line Bs indicates the rotational moment given from the coil spring 56 to the accelerator grip member 46 through the grip sleeve 44. The rotational moment Bs is a rotational moment based on repulsion force by the coil spring 56. The broken line Bf1 indicates the rotational moment given from the annular members 54, to the accelerator grip member 46 through the collar 50 and the grip sleeve 44 when the accelerator grip member 46 is rotating from its initial position (fully closed position) to a fully opened position. The broken line Bf2 indicates the rotational moment given from the annular members 54, to the accelerator grip member 46 through the collar 50 and the grip sleeve 44 when the accelerator grip member 46 is rotating from its fully opened position to the initial position. The rotational moments Bf1, Bf2 are generated due to a dynamic frictional force in the regions of contact between the outer circumferential surface 50a of the collar 50 and the inner circumferential surfaces 60f (the pointed end portions 60g) of the annular members 54. Arrows associated with the broken lines Bs, Bf1, Bf2 indicate the directions of rotation of the accelerator grip member 46.

As shown in Fig. 6, the rotational moment Bs given by the coil spring 56 to the accelerator grip member 46 always acts in the direction to close the accelerator grip member 46 regardless of the rotational direction of the accelerator grip member 46. Also, the rotational moment Bs increases as the amount of rotation of the accelerator grip member 46 increases.

The rotational moment Bf1 which is generated when the accelerator grip member 46 is rotated from its initial position to the fully opened position acts in the closing direction of the accelerator grip member 46. On the other hand, the rotational moment Bf2 which is generated when the accelerator grip member 46 is rotated from its fully opened position to the initial position acts in the opening direction of the accelerator grip member 46. Specifically, the dynamic frictional force generated in the regions of contact between the outer circumferential surface 50a of the collar 50 and the inner circumferential surfaces 60f (the pointed end portions 60g) of the annular members 54 provides a rotational moment to the accelerator grip member 46 working in the opposite direction to the direction of rotation of the accelerator grip member 46. As understood, the rotational moments Bf1, Bf2 are given from the annular members 54 to the accelerator grip member 46 as a load (resistance) to the rotation of the accelerator grip member 46 when the accelerator grip member 46 is rotated.

The solid line B1 represents the rotational moment obtained by combining the rotational moment Bs with the rotational moment Bf1. Therefore, the rotational moment B1 is equal to the rotational moment given by the coil spring 56 and the annular members 54 to the accelerator grip member 46 when the accelerator grip member 46 rotates from its initial position to the fully opened position. The solid line B2 represents the rotational moment obtained by combining the rotational moment Bs with the rotational moment Bf2. Therefore, the rotational moment B2 is equal to the rotational moment given by the coil spring 56 and the annular members 54 to the accelerator grip member 46 when the accelerator grip member 46 rotates from its fully opened position to the initial position. Arrows associated with the broken lines B1, B2 indicate the rotating directions of the accelerator grip member 46.

As shown in Fig. 6, the accelerator grip member 46 is given the rotational moment B1 or the rotational moment B2 by the coil spring 56 and the annular members 54 depending on the rotating direction of the accelerator grip member 46. The rotational moments B1 and B2 are both positive rotational moments. Therefore, regardless of the rotating direction of the accelerator grip member 46, the rotational moment given by the coil spring 56 and the annular members 54 to the accelerator grip member 46 acts in the closing direction of the accelerator grip member 46. Therefore, the rotational moment B1 works as a load to the rotation of the accelerator grip member 46 when the accelerator grip member 46 is rotating in the opening direction. On the other hand, the rotational moment B2 works as an assisting force to the rotation of the accelerator grip member 46 when the accelerator grip member 46 is rotating in the opening direction.

Next, description will be made for a relationship between the rotational moment given to the accelerator grip member 46 by the rider's operation and rotating movement of the accelerator grip member 46.
In Fig. 6, region A1 is a region where the amount of rotational moment given to the accelerator grip member 46 by the rider's operation is smaller than the rotational moment B2. Under the condition where the amount of rotational moment given to the accelerator grip member 4 6 by the rider' s operation is smaller than the rotational moment B2, the rotational moment B2 which works in the closing direction of the accelerator grip member 46 is greater than the rotational moment working in the opening direction of the accelerator grip member 46. Therefore, when the amount of rotational moment given to the accelerator grip member 46 by the rider's operation is in the region A1, the accelerator grip member 46 rotates in the closing direction.

Region A2 is a region where the amount of rotational moment given to the accelerator grip member 46 by the rider' s operation is not smaller than the rotational moment B2 and not greater than the rotational moment B1. Where the amount of rotational moment given to the accelerator grip member 46 by the rider's operation is not smaller than the rotational moment B2, the rotational moment which works in the opening direction of the accelerator grip member 46 is not smaller than the rotational moment B2 which works in the closing direction of the accelerator grip member 46. Therefore, the accelerator grip member 46 does not rotate in the closing direction. On the other hand, when the amount of rotational moment given to the accelerator grip member 46 by the rider's operation is not greater than the rotational moment B1, the rotational moment which works in the opening direction of the accelerator grip member 46 is not greater than the rotational moment B1 which works in the closing direction of the accelerator grip member 46. Therefore, the accelerator grip member 46 does not rotate in the opening direction. As understood, when the amount of rotational moment given to the accelerator grip member 46 by the rider' s operation is in the region A2, the accelerator grip member 46 rotates neither in the opening direction nor in the closing direction, i.e., it is stationary.

The region A3 is a region where the amount of rotational moment given to the accelerator grip member 46 by the rider's operation is greater than the rotational moment B1. Where the amount of rotational moment given to the accelerator grip member 46 by the rider's operation is greater than the rotational moment B1, the rotational moment which works in the opening direction of the accelerator grip member 46 is greater than the rotational moment B1 which works in the closing direction of the accelerator grip member 46. Therefore, when the amount of rotational moment given to the accelerator grip member 46 by the rider's operation is in the region A3, the accelerator grip member 46 rotates in the opening direction.

As described, in the motorcycle 10, if the amount of rotational moment given to the accelerator grip member 46 by the rider's operation is in the region A2, the accelerator grip member 46 does not rotate. Therefore, the rider can easily stop rotation of the accelerator grip member 46 at a desired rotational position by controlling the rotational moment which the rider is applying to the accelerator grip member 46 to an amount within the region A2. With this arrangement, the rider can easily adjust the output of the engine 20.

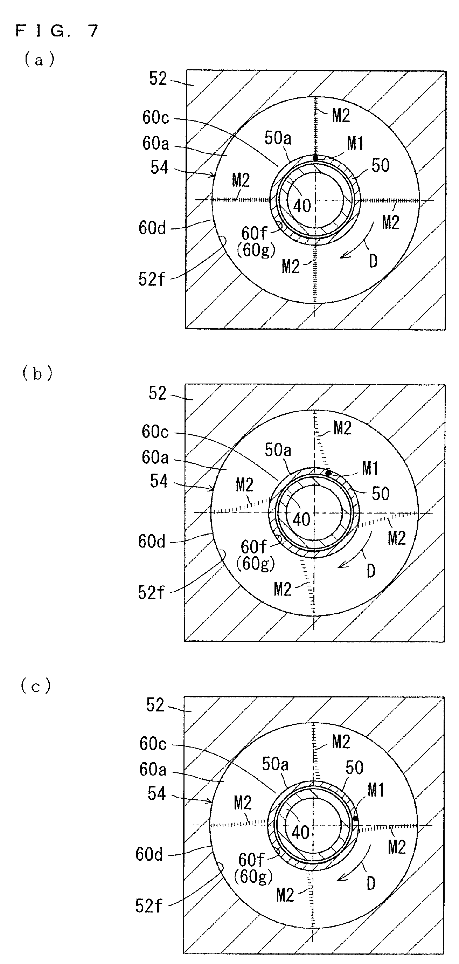

Next, description will be made for shape changes in the annular members 54 when the accelerator grip member 46 is rotated. Fig. 7 includes illustrative side views showing the handlebar 40, the collar 50, the case member 52, and the annular member 54. Fig. 7(a) shows a state where there is no shape change in the annular members 54 whereas Fig. 7(b) and Fig. 7(c) show states where there are shape changes in the annular members 54. It should be noted here that in order to facilitate easy recognition of the rotational position of the collar 50, a circular mark M1 is placed at a reference position in the collar 50, and in order to facilitate easy perception of the state of deformation of the annular member 54, radially extending markings M2 are placed at reference positions in the annular member 54 in Fig. 7. Also, in Fig. 7, Arrow D indicates a rotating direction of the collar 50 when the accelerator grip member 46 rotates in the opening direction.

Referring to Fig. 7(a), when the rider is rotating the accelerator grip member 46 (see Fig. 3) in the opening direction, the rotational moment working in the Arrow D direction is given from the accelerator grip member 46 to the collar 50 through the grip sleeve 44 (see Fig. 3). This generates a static frictional force in the region of contact between the outer circumferential surface 50a of the collar 50 and the inner circumferential surface 60f (the pointed end portion 60g) of the contact member 60 (the annular member 54). Thus, a force working in the Arrow D direction is applied to the inner circumferential surface 60f (the inner circumferential portion 60c) of the contact member 60.

Referring to Fig. 7(b), at an early stage of rotation of the accelerator grip member 46, the inner circumferential surface 60f of the contact member 60 is pulled in the Arrow D direction by the static frictional force generated in the contact region between itself and the outer circumferential surface 50a of the collar 50. On the other hand, as has been described with reference to Fig. 5, the outer circumferential portion 60a of the contact member 60 is pressed by the core member 62 onto the inner circumferential surface 52f of the case member 52 with a sufficient amount of force, and therefore, the outer circumferential surface 60d is prevented from slipping with respect to the inner circumferential surface 52f of the case member 52. As a result, as shown in Fig. 7(b), the inner circumferential portion 60c (the inner circumferential surface 60f) moves in Arrow D direction with respect to the outer circumferential portion 60a (the outer circumferential surface 60d) of the contact member 60, and the contact member 60 is deformed. As described earlier, the tightening member 64 (see Fig. 5) is attached so as to surround the inner circumferential portion 60c from a radially outside direction. Therefore, although the inner circumferential portion 60c of the contact member 60 moves in Arrow D direction to deform the contact member 60, the tightening member 64 (see Fig. 5) is not deformed. Therefore, although the contact member 60 is deformed, the function of the tightening member 64 to tighten the inner circumferential portion 60c is not impaired.

When the rider further rotates the accelerator grip member 46 (the collar 50) in Arrow D direction, the static frictional force in the region of contact between the inner circumferential surface 60f of the contact member 60 and the outer circumferential surface 50a of the collar 50 exceeds a maximum static frictional force, and the inner circumferential surface 60f starts sliding with respect to the outer circumferential surface 50a. In other words, the inner circumferential surfaces 60f start sliding with respect to the outer circumferential surface 50a when the rotational moment applied to the accelerator grip member 46 by the rider's operation exceeds the rotational moment generated based on the repulsion force of the coil spring 56 and the static frictional force in the regions of contact between the inner circumferential surfaces 60f and the outer circumferential surface 50a. As a result, a dynamic frictional force is generated between the inner circumferential surface 60f of the contact member 60 and the outer circumferential surface 50a of the collar 50. Referring to Fig. 7(c), since the dynamic frictional force is smaller than the static frictional force, the amount of force applied from the outer circumferential surface 50a of the collar 50 to the inner circumferential surface 60f of the contact member 60 in Arrow D direction decreases. Thus, the amount of travel of the inner circumferential portion 60c (the inner circumferential surface 60f) of the contact member 60 in Arrow D direction decreases, and the amount of deformation in the contact member 60 decreases.

It should be noted here that the frictional force in the regions of contact between the inner circumferential surfaces 60f and the outer circumferential surface 50a changes from the static frictional force to the dynamic frictional force instantaneously when the inner circumferential surfaces 60f of the contact members 60 start sliding with respect to the outer circumferential surface 50a of the collar 50. The frictional force generated in the regions of contact between the inner circumferential surfaces 60f of the contact members 60 and the outer circumferential surface 50a of the collar 50 acts as a resistance to the rotation of the accelerator grip member 46. This means, that if the frictional force generated in the regions of contact between the inner circumferential surfaces 60f and the outer circumferential surface 50a changes instantaneously and significantly, the resistance to the rotation of the accelerator grip member 46 will change instantaneously and significantly, which will give a sense of inconsistency to the rider. According to the accelerator grip control 42, however, the contact member 60 is made of a viscoelastic polymer material and therefore, even if the frictional force generated in the region of contact between the inner circumferential surface 60f and the outer circumferential surface 50a changes from a static frictional force to a dynamic frictional force, the amount of deformation in the contact member 60 does not decrease rapidly. Specifically, after the frictional force in the region of contact between the inner circumferential surface 60f and the outer circumferential surface 50a changes from a static frictional force to a dynamic frictional force, the amount of deformation in the contact member 60 decreases slowly. Specifically, the contact member 60 deforms slowly, from the state shown in Fig. 7(b) to the state shown in Fig. 7(c). In this case, since the dynamic frictional force in the regions of contact between the inner circumferential surfaces 60f and the outer circumferential surface 50a decreases slowly, the resistance to the rotation of the accelerator grip member 46 also decreases slowly. Thus, the rider can operate the accelerator grip member 46 without having a feeling of inconsistency.

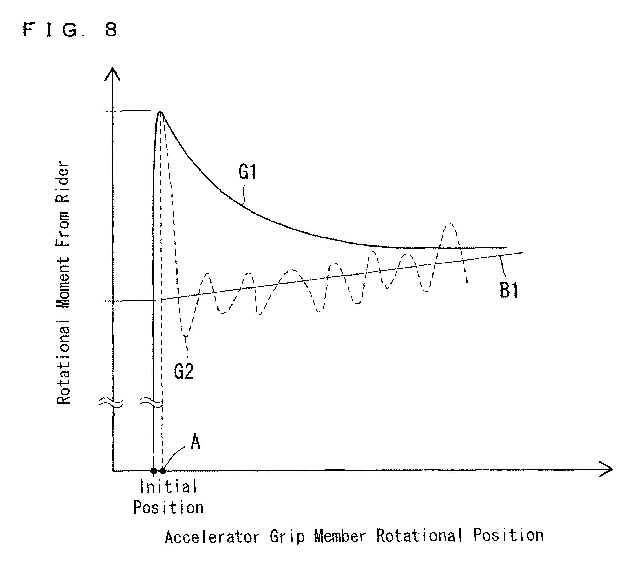

Fig. 8 is a diagram showing how the rotational moment on the accelerator grip member 46 given by the rider's operation will change. In Fig. 8, a solid line G1 represents the rotational moment applied to the accelerator grip member 46 by the rider' s operation. A solid line G2 in Fig. 8 represents the rotational moment applied to a grip main body in the hand grip control disclosed in Patent Document 1 by the rider's operation. Also, in Fig. 8, a rotational position A is a rotational position of the accelerator grip member 46 when the inner circumferential surfaces 60f of the contact members 60 start sliding with respect to the outer circumferential surface 50a of the collar 50. Fig. 8 also shows the rotational moment B1, which is a rotational moment in the region surrounded by an alternated long and short dot line C in Fig. 6.

As described already, in the accelerator grip control 42, the contact member 60 used in the annular member 54 is made of a viscoelastic polymer material. This arrangement makes it possible that the frictional force in the regions of contact between the inner circumferential surfaces 60f and the outer circumferential surface 50a decreases slowly when the inner circumferential surfaces 60f of the contact members 60 start sliding with respect to the outer circumferential surface 50a of the collar 50. As a result, it is possible to achieve a slow decrease in the resistance to the rotation of the accelerator grip member 46. In this case, referring to Fig. 8, it is possible to slowly decrease the rotational moment G1, which is applied to the accelerator grip member 46 by the rider's operation, after the accelerator grip member 46 passes its rotational position A. The arrangement provides smooth rotation of the accelerator grip member 46, and the rider can operate the accelerator grip member 46 comfortably.

On the other hand, the handlebar grip control according to Patent Document 1 includes a slider which is made of a polyacetal resin, a metal or the like. Therefore, when the tube guide starts sliding with respect to the slider, the frictional force in a region of contact between the slider and the tube guide decreases rapidly, resulting in a stick-slip phenomenon. In this case, the resistance to the grip main body's rotation also decreases rapidly, and is unstable. Therefore, referring to Fig. 8, the rotational moment G2 which is applied to the grip main body by the rider' s operation also decreases rapidly when the tube guide starts sliding with respect to the slider, and is unstable. Due to this, it is likely that the rider will feel uncomfortable when rotating the grip main body.

It should be noted here that as has been described, the area of contact between the outer circumferential surface 60d of the contact member 60 and the inner circumferential surface 52f of the case member 52 is greater than the area of contact between the inner circumferential surface 60f of the contact member 60 and the outer circumferential surface 50a of the collar 50. Therefore, it is possible to make a sufficiently larger maximum static frictional force in the region of contact between the outer circumferential surface 60d and the inner circumferential surface 52f than a maximum static frictional force in the region of contact between the inner circumferential surface 60f and the outer circumferential surface 50a. This prevents the outer circumferential surface 60d from starting sliding with respect to the inner circumferential surface 52f before the inner circumferential surface 60f starts sliding with respect to the outer circumferential surface 50a.

Hereinafter, functions and advantages of the motorcycle 10 will be described.
In the motorcycle 10, the annular members 54 are used as means for generating a resistance to the rotation of the accelerator grip member 46. The annular members 54 have the outer circumferential portions 60a in contact with the case member 52 along their entire circumferences, and the annular members 54 have the inner circumferential portions 60c in contact with the collar 50 along their entire circumferences. In this case, it is possible, when the outer circumferential portions 60a of the annular members 54 slide with respect to the case member 52, to keep the outer circumferential portions 60a of the annular members 54 in contact with the case member 52 along their entire circumferences. This makes it possible to reduce irregular changes in the dynamic frictional force generated in the regions of contact between the annular members 54 and the case member 52. Likewise, it is possible, when the inner circumferential portions 60c of the annular members 54 slide with respect to the collar 50, to keep the inner circumferential portions 60c of the annular members 54 in contact with the collar 50 along their entire circumferences. This makes it possible to reduce irregular changes in the dynamic frictional force generated in the regions of contact between the annular members 54 and the collar 50. As a result of these, it is possible to reduce irregular changes in the load applied from the annular members 54 to the accelerator grip member 46, and therefore to reduce irregular changes in the resistance to the rotation of the accelerator grip member 46. Therefore, the rider can operate the accelerator grip member without getting a feeling of inconsistency.

Also, in the motorcycle 10, the annular member 54 is in contact with the collar 50, so if the rider' s operation on the accelerator grip member 46 has caused the collar 50 to become eccentric to the handlebar 40, the force which is applied from the collar 50 to the annular member 54 increases in part of the annular member 54. As a result, the frictional force generated between the annular member 54 and the collar 50 increases near that part of the annular member 54. However, the other part of the annular member 54 receives a reduced amount of force, resulting in reduced change in the total amount of frictional force generated in the region of contact between the annular member 54 and the collar 50. As described, according to the motorcycle 10, it is possible to reduce changes in the frictional force generated in the region of contact between the annular member 54 and the collar 50 even if the collar 50 becomes eccentric to the handlebar 40. Therefore, it is possible to reduce changes in the resistance to the rotation of the accelerator grip member 46. Thus, the rider can operate the accelerator grip member 46 without having a feeling of inconsistency.

Also, according to the motorcycle 10, each annular member 54 has the contact member 60 and the core member 62 which is buried in the outer circumferential portion 60a of the contact member 60. In this case, the arrangement makes it possible to press the outer circumferential portion 60c of the annular member 54 onto the case member 52 with the core member 62. Thus, it becomes possible to prevent the outer circumferential portion 60a of the annular member 54 from slipping with respect to the case member 52, and to achieve stable sliding of the inner circumferential portion 60c of the annular member 54 with respect to the collar 50. As a result, it is possible to sufficiently prevent irregular changes in the dynamic frictional force generated in the region of contact between the inner circumferential portion 60c of the annular member 50 and the collar 50.

The annular member 54 has the tightening member 64 for tightening the inner circumferential portion 60c of the contact member 60. In this case, it is possible to make stable contact of the inner circumferential portion 60c of the annular member 54 with the collar 50. Thus, it is possible to sufficiently prevent irregular changes in the dynamic frictional force generated in the region of contact between the inner circumferential portion 60c of the annular member 54 and the collar 50.

The contact member 60 is provided by a viscoelastic friction member. In this case, it is possible, when the contact member 60 starts sliding with respect to the collar 50, to slowly reduce the dynamic frictional force which is generated in the region of contact between the contact member 60 and the collar 50. This makes it possible to slowly decrease the resistance to the rotation of the accelerator grip member. As a result, it is possible to prevent change in operational feeling of the accelerator grip member 46. Also, since it is possible to slowly decrease the dynamic frictional force generated in the region of contact between the contact member 60 and the collar 50, it is possible to prevent a stick-slip phenomenon. As a result of these, the rider is able to operate the accelerator grip member 46 comfortably.

In the motorcycle 10, the grip sleeve 44 which serves as a sliding bearing supports the accelerator grip member 46 rotatably with respect to the handlebar 40. In this case, it is possible to dispose the handlebar 40, the grip sleeve 44 and the accelerator grip member 46 coaxially with each other, which makes it possible to simplify the structure and reduce the size of the accelerator grip control 42.

Also, in the motorcycle 10, the accelerator position sensor 58 is housed in the case member 52, which makes it possible to protect the accelerator position sensor 58 with the case member 52.

It should be noted here that the accelerator grip control 42 described so far is provided with three annular members 54. However, the number of the annular members 54 is not limited to the embodiment described so far. For example, the accelerator grip control may be provided with one annular member 54, two annular members 54 or four or more annular members 54.

Also, in the accelerator grip control 42 described thus far, the fixing member F is constituted by the handlebar 40 and the case member 52. However, the fixing member may include other members which are fixed to the handlebar 40 or to the case member 52.

Also, in the accelerator grip control 42 described so far, the rotating member R is constituted by the grip sleeve 44, the accelerator grip member 46 and the collar 50. However, the rotating member may include other members which rotate together with the grip sleeve 44, the accelerator grip member 46 and the collar 50. Also, in the accelerator grip control 42, the rotating member R includes the cylindrical collar 50. However, it is also acceptable not to provide the collar 50. For example, a cylindrical portion which has the same shape as the collar 50 may be formed to the grip sleeve in place of the collar 50. In this case, the annular members 54 may be disposed between the cylindrical portion of the grip sleeve and the projection 52e of the case member 52, and the annular members 54 and the grip sleeve may be in direct contact with each other.

Also, in the accelerator grip control 42 described thus far, the annular members 54 have the tightening members 64. However, the accelerator grip control may include annular members which do not have the tightening members.

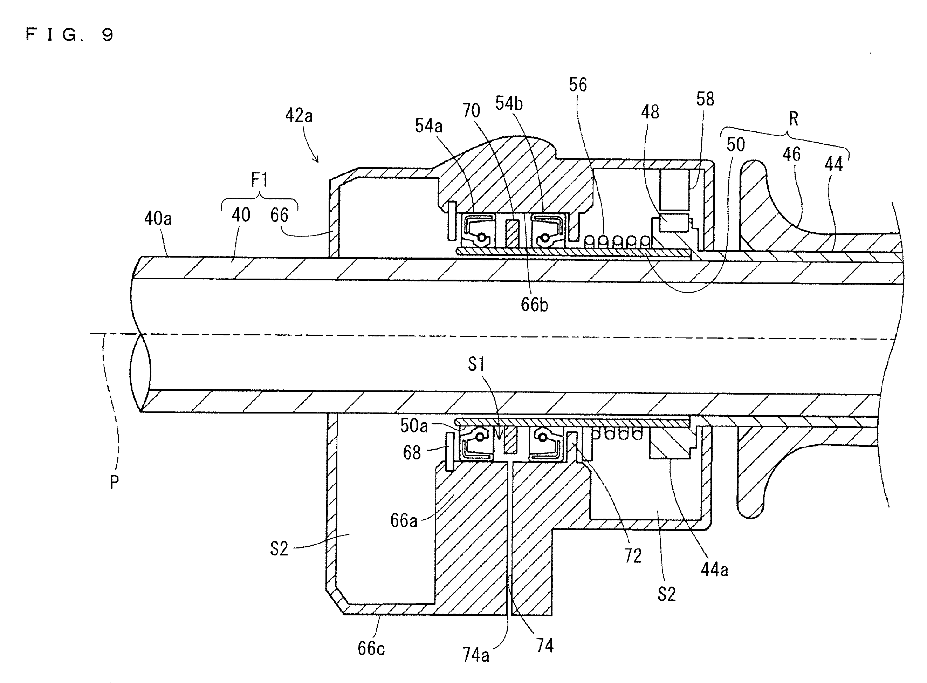

The present invention is also applicable to a motorcycle which includes the accelerator grip control 42a shown in Fig. 9. The accelerator grip control 42a shown in Fig. 9 differs from the accelerator grip control 42 (see Fig. 3) which has been discussed so far, in that the case member 52 is replaced by a case member 66; that the case member 66 is provided with a stop ring 68; and that the annular members 54 are replaced by annular members 54a, 54b and a supplying member 70. Therefore, description hereafter will only be made for the case member 66, the stop ring 68, the annular members 54a, 54b, and the supplying member 70, with no other description for the rest of the accelerator grip control 42a. Also, the case member 66 differs from the case member 52 in that the projection 52e is replaced by a projection 66a; that a flange portion 72 is provided; and that a vent hole 74 is provided. Therefore, no description will be made for the case member 66 other than for the projection 66a, the flange portion 72 and the vent hole 74. It should be noted here that in the present embodiment, the handlebar 40 and the case member 66 constitute a fixing member F1.

Referring to Fig. 9, the projection 66a in the case member 66 has essentially the same shape as the projection 52e of the case member 52. The annular members 54a, 54b have essentially the same construction as the annular members 54 in Fig. 3. The annular member 54a is attached, like the annular members 54 in Fig. 3, to an inner circumferential surface 66b between the outer circumferential surface 50a of the collar 50 and the inner circumferential surface 66b of the case member 66. The annular member 54b is attached, in reverse orientation from the annular member 54 in Fig. 3, to the inner circumferential surface 66b between the outer circumferential surface 50a of the collar 50 and the inner circumferential surface 66b of the case member 66.

The stop ring 68 is fixed to a left end portion of the projection 66a. The annular member 54a is limited in its leftward movement by the stop ring 68. The flange portion 72 is annular, and is integral with the projection 66a, extending inward from a right end portion of the projection 66a. The annular member 54a is limited in its rightward movement by the flange portion 72. Since the annular members 54a, 54b have essentially the same configuration as the annular members 54 described earlier, the annular members 54a, 54b are pressed onto the projection 66a with a sufficient amount of pressure. Therefore, the annular members 54a, 54b do not move in axial directions of the collar 50 under normal conditions.

The supplying member 70 is annular, and is attached to the outer circumferential surface of the collar 50 between the annular member 54a and the annular member 54b. The supplying member 70 may be provided by a felt ring for example. The supplying member 70 is impregnated with a lubricant in advance. The supplying member 70 supplies the lubricant to an annular space S1 enclosed by the collar 50, the projection 66a, the annular member 54a and the annular member 54b. The lubricant may be provided by a silicone lubricant, glycol lubricant, oil, grease or the like.

The vent hole 74 extends from the inner circumferential surface 66b of the projection 66a to an outer circumferential surface 66c of the case member 66. The space S1 and the outside space of the case member 66 communicate with each other via the vent hole 74. The vent hole 74 should preferably be able to prevent water, dirt, etc. from making entry into the space S1 from the outside of the case member 66. Specifically, for example, it is preferable that the vent hole 74 has a sufficiently small diameter. Also, it is preferable, for example, that an opening 74a of the vent hole 74 in the outer circumferential surface 66c of the case member 66 is positioned at a lower portion of the case member 66 or at a lower position than the space S1.

It should be noted here that the annular members 54a, 54b have tight contact with the outer circumferential surface 50a of the collar 50 and the inner circumferential surface 66b of the projection 66a. Therefore, air movement between the space S1 and another space S2 in the case member 66 is prevented by the annular members 54a, 54b. The arrangement prevents the lubricant, which is supplied from the supplying member 70 to the space S1, from leaking out of the space S1 to the space S2 or elsewhere in the outside space of the case member 66.

Like the annular members 54 in the accelerator grip control 42, the annular members 54a, 54b in the accelerator grip control 42a have inner circumferential surfaces in contact with the outer circumferential surface 50a of the collar 50 along their entire circumferences. The arrangement makes it possible to reduce changes in the dynamic frictional force generated in the regions of contact between the annular members 54a, 54b and the collar 50. As a result, it is possible to reduce changes in the resistance to the rotation of the accelerator grip member 46. Therefore, a motorcycle which includes the accelerator grip control 42a provides the same functions and advantages as offered by the motorcycle 10 which includes the accelerator grip control 42.

Also, according to the accelerator grip control 42a, the supplying member 70 supplies lubricant to the space S1. This makes it possible to keep the annular members 54a, 54b in good contact with the collar 50 for an extended period of time. Also, since the supplying member 70 is provided between the annular members 54a, 54b, it is possible to supply the lubricant uniformly to the annular members 54a, 54b.

Also, should the annular members 54a, 54b move axially of the collar 50, the stop ring 68 and the flange portion 72 will limit the movement of the annular members 54a, 54b.

Also, since the case member 66 is formed with the vent hole 74 which provides communication between the inside space and the outside space of the case member 66, it is possible to prevent a problem that pressure in the inside space of the case member 66 will increase or decrease with respect to the pressure in the outside space. This prevents deformation of various constituent elements of the accelerator grip control 42a, ensuring stable contact of the annular members 54a, 54b with the collar 50.

The accelerator grip control 42a described thus far is provided with the annular members 54a, 54b which have essentially the same construction as the annular members 54. However, the accelerator grip control may include annular members which do not have tightening members.

Also, in the accelerator grip control 42 described thus far, the fixing member F1 is constituted by the handlebar 40 and the case member 66. However, the fixing member may include other members which are fixed to the handlebar 40 or to the case member 66.

In the embodiment described above, the annular members are designed so that when the rider operates the accelerator grip member 46, the inner circumferential surface of the contact member slides with respect to the outer circumferential surface 50a of the collar 50. However, the design of the annular member is not limited to the embodiments described so far.

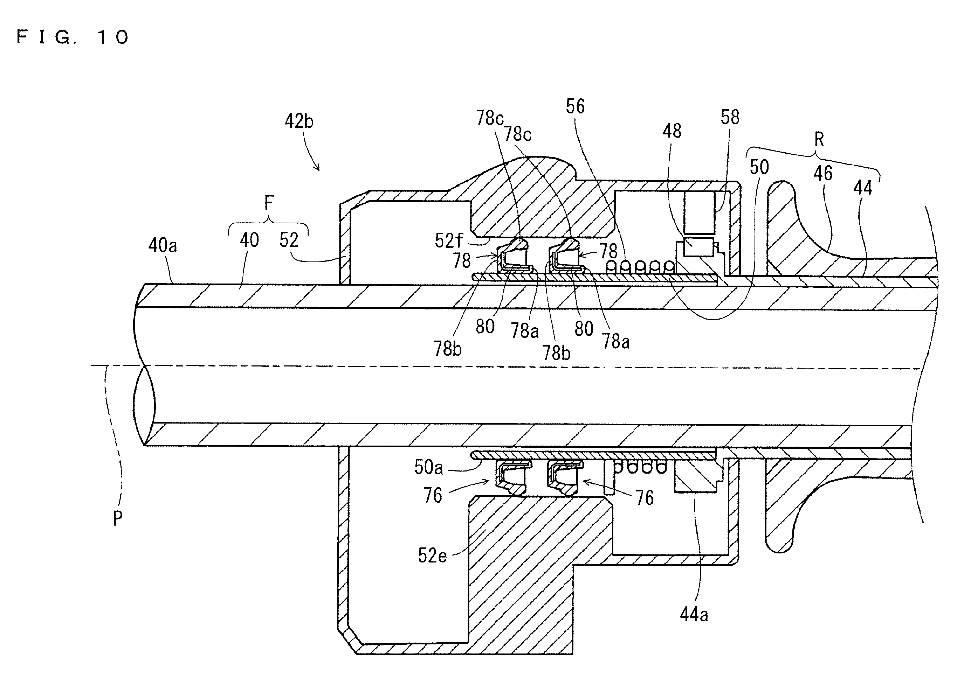

Fig. 10 shows an accelerator grip control including annular members designed differently. Fig. 10 shows an accelerator grip control 42b, which differs from the accelerator grip control 42 (see Fig. 3) described so far, in that the annular members 54 are replaced by a plurality (two in the present embodiment) of annular members 76. Therefore, no other description will be made here for the accelerator grip control 42b than the annular members 76.

Referring to Fig. 10, the annular members 76 are attached to the collar 50 axially of the collar 50, between the collar 50 and the projection 52e. Each annular member 76 includes an annular contact member 78 and an annular core member 80. The contact member 78 is made of the same material as the contact member 60 (see Fig. 3). The contact member 78 includes a cylindrical inner circumferential portion 78a; an annular side wall portion 78b extending and widening radially from a left end portion of the inner circumferential portion 78a; and a generally cylindrical outer circumferential portion 78c extending rightward from an outer edge of the side wall portion 78b, with a slight outward tilt. The inner circumferential portion 78a is in contact with the outer circumferential surface 50a of the collar 50 along its entire circumference. The outer circumferential portion 78c has a right end portion which is in contact with the outer circumferential surface 50a of the collar 50 along its entire circumference.

The core member 80 is made of a metal for example. The core member 80 has an L-shaped section. The core member 80 is buried into the inner circumferential portion 78a and the side wall portion 78b of the contact member 78.

In the accelerator grip control 42b, the inner circumferential portion 78a of the contact member 78 is pressed onto the outer circumferential surface 50a of the collar 50 by the core member 80 with a sufficient amount of pressure. Thus, it is possible to make a sufficiently large maximum static frictional force between the inner circumferential portion 78a of the contact member 78 and the outer circumferential surface 50a of the collar 50. As a result, it is possible to fix the contact member 78 to the collar 50. It is also possible to sufficiently prevent the inner circumferential portion 78a of the contact member 78 from slipping with respect to the outer circumferential surface 50a of the collar 50.

In its axial direction of the contact member 78, the region of contact between the inner circumferential portion 78a of the contact member 78 and the outer circumferential surface 50a of the collar 50 has a greater width than the width in the region of contact between the outer circumferential portion 78c of the contact member 78 and the inner circumferential surface 52f of the case member 52. Therefore, the area of contact between the inner circumferential portion 78a of the contact member 78 and the outer circumferential surface 50a of the collar 50 is greater than the area of contact between the outer circumferential portion 78c of the contact member 78 and the inner circumferential surface 52f of the case member 52. Thus, it is possible to make a sufficiently larger maximum static frictional force in the region of contact between the inner circumferential portion 78a and the collar 50 than a maximum static frictional force in the region of contact between the outer circumferential portion 78c and the case member 52.

In the accelerator grip control 42b which has the above-described configuration, the accelerator grip member 46, the grip sleeve 44, the collar 50 and the annular members 76 rotate integrally with each other when the rider operates the accelerator grip member 46. During the operation, the outer circumferential portions 78c of the contact members 78 rotate while sliding with respect to the inner circumferential surface 52f of the case member 52, so a dynamic frictional force is generated in the regions of contact between the outer circumferential portions 78c and the inner circumferential surface 52f. The dynamic frictional force generated in the regions of contact between the outer circumferential portions 78c and the inner circumferential surface 52f is applied to the accelerator grip member 46 via the annular members 76, the collar 50, and the grip sleeve 44, as a resistance to the rotation.

As described, the accelerator grip control 42b which includes the annular members 76 can, like the accelerator grip control 42 which includes the annular members 54, apply the frictional force generated by the annular members 76 (the contact members 78) to the accelerator grip member 46, as a resistance to the rotation. Also, the outer circumferential portions 78c of the contact members 78 are in contact with the inner circumferential surface 52f of the projection 52e along their entire circumferences. The arrangement makes it possible to reduce changes in the dynamic frictional force generated in the regions of contact between the contact members 78 and the proj ection 52e. As a result, it is possible to reduce changes in the resistance to the rotation of the accelerator grip member 46. Therefore, a motorcycle which includes the accelerator grip control 42b provides the same functions and advantages as offered by the motorcycle 10 which includes the accelerator grip control 42 (see Fig. 3).

It should be noted here that the accelerator grip control 42b described so far is provided with two annular members 76. However, the number of the annular members 76 is not limited to the embodiment described so far. For example, the accelerator grip control may be provided with one annular member 76, or three or more annular members 76.

In the embodiments described above, the annular members are provided between the collar and the case member. However, the annular members may be provided elsewhere.

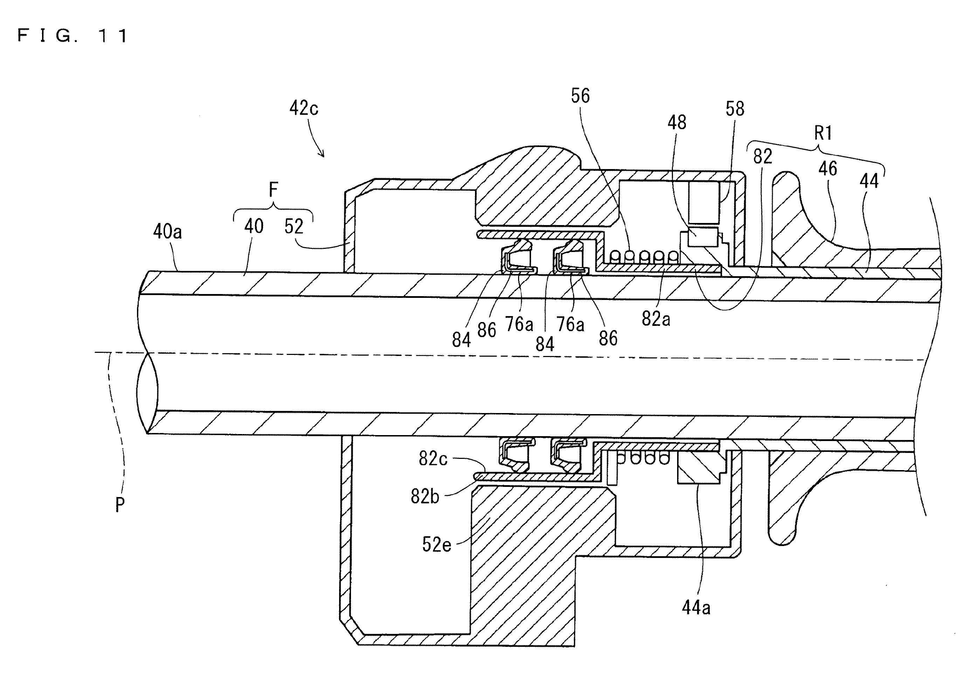

Fig. 11 is an illustrative diagram which shows an example of an accelerator grip control in which annular members are disposed between a handlebar and a collar. Fig. 11 shows an accelerator grip control 42C, which differs from the accelerator grip control 42b shown in Fig. 10 in that the collar 50 is replaced by a collar 82; and the annular members 76 are replaced by a plurality (two in the present embodiment) of annular members 76a. Therefore, no other description will be made here for the accelerator grip control 42c than the collar 82 and the annular members 76a. It should be noted here that in the present embodiment, a grip sleeve 44, an accelerator grip member 46 and the collar 82 constitute a rotating member R1.

Referring to Fig. 11, the collar 82 includes a small-diameter portion 82a fixed to a flange portion 44a of the grip sleeve 44; and a large-diameter portion 82b which has a larger diameter than the small-diameter portion 82a and extends leftward from the small-diameter portion 82a. The annular members 76a are attached to the handlebar 40 axially of the handlebar 40, between the handlebar 40 and the large diameter portion 82b. The annular members 76a have contact members 84 and core members 86 like the contact members 78 (see Fig. 10) and the core members 80 (see Fig. 10) of the annular members 76 (see Fig. 10). The inner circumferential portion of the contact member 84 is in contact with the outer circumferential surface 40a of the handlebar 40 along its entire circumference. The outer circumferential portion of the contact member 84 has a right end portion which is in contact with the inner circumferential surface 82c of the large-diameter portion 82b of the collar 82 along its entire circumference.

In the accelerator grip control 42c, the inner circumferential portion of the contact member 84 is pressed onto the outer circumferential surface 40a of the handlebar 40 by the core member 86 with a sufficient amount of pressure. Thus, it is possible to make a sufficiently large maximum static frictional force between the inner circumferential portion of the contact member 84 and the outer circumferential surface 40a of the handlebar 40. As a result, it is possible to fix the contact member 84 to the handlebar 40. It is also possible to sufficiently prevent the inner circumferential portion of the contact member 84 from slipping with respect to the outer circumferential surface 40a of the handlebar 40.

Also, in its axial direction of the contact member 84, the region of contact between the inner circumferential portion of the contact member 84 and the outer circumferential surface 40a of the handlebar 40 has a greater width than the width of the region of contact between the outer circumferential portion of the contact member 84 and the inner circumferential surface 82c of the collar 82. Therefore, the area of contact between the inner circumferential portion of the contact member 84 and the outer circumferential surface 40a of the handlebar 40 is greater than the area of contact between the outer circumferential portion of the contact member 84 and the outer circumferential surface 50a of the collar 82. Thus, it is possible to make a sufficiently large maximum static frictional force in the region of contact between the contact member 84 and the handlebar 40 than a maximum static frictional force in the region of contact between the contact member 84 and the collar 82.

In the accelerator grip control 42c which has the above-described configuration, the accelerator grip member 46, the grip sleeve 44, and the collar 82 rotate integrally with each other when the rider operates the accelerator grip member 46. During the operation, the inner circumferential surface 82c of the collar 82 rotates while sliding with respect to the outer circumferential portions of the contact members 84, so a dynamic frictional force is generated in the regions of contact between the inner circumferential surface 82c of the collar 82 and the outer circumferential portions of the contact members 84. The dynamic frictional force generated in the regions of contact between the collar 82 and the contact members 84 is applied to the accelerator grip member 46 via the collar 82 and the grip sleeve 44, as a resistance to the rotation.

As described, the accelerator grip control 42c which includes the annular members 76a can, like the accelerator grip control 42 (see Fig. 3) which includes the annular members 54 (see Fig. 3), apply the frictional force generated by the annular members 76a (the contact members 84) to the accelerator grip member 46, as a resistance to the rotation. Also, the outer circumferential portions of the contact members 84 are in contact with the inner circumferential surface 82c of the collar 82 along their entire circumferences. The arrangement thus makes it possible to reduce changes in the dynamic frictional force generated in the regions of contact between the contact members 84 and the collar 82. As a result, it is possible to reduce changes in the resistance to the rotation of the accelerator grip member 46. Therefore, a motorcycle which includes the accelerator grip control 42c provides the same functions and advantages as offered by the motorcycle 10 which includes the accelerator grip control 42 (see Fig. 3).

It should be noted here that the accelerator grip control 42c described so far is provided with two annular members 76a. However, the number of the annular members 76a is not limited to the embodiment described so far. For example, the accelerator grip control may be provided with one annular member 76a, or three or more annular members 76a.

Also, in the accelerator grip control 42c described so far, the rotating member R1 is constituted by the grip sleeve 44, the accelerator grip member 46 and the collar 82. However, the rotating member may include other members which rotate together with the grip sleeve 44, the accelerator grip member 46 and the collar 82. Also, in the accelerator grip control 42c, the rotating member R1 includes the collar 82. However, it is also acceptable not to provide the collar 82. For example, a cylindrical portion which has the same shape as the collar 82 may be formed to the grip sleeve in place of the collar 82. In this case, the annular members 76a may be disposed between the cylindrical portion of the grip sleeve and the outer circumferential surface 40a of the handlebar 40, and the annular members 76a and the grip sleeve may be contacted directly with each other.

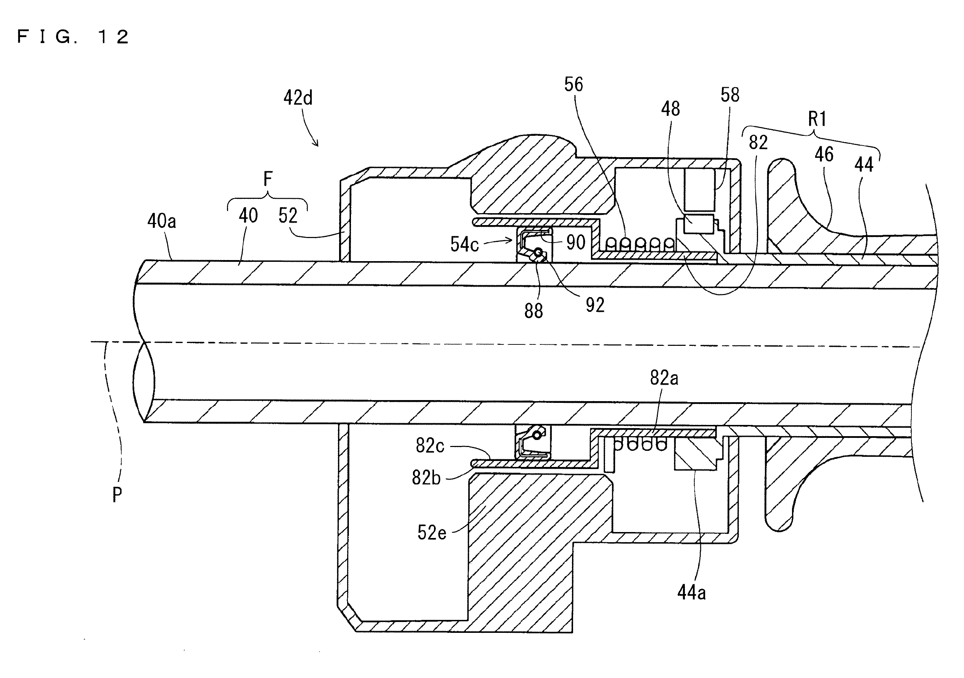

Fig. 12 is an illustrative diagram which shows another example of the accelerator grip control in which an annular member is disposed between a handlebar and a collar. Fig. 12 shows an accelerator grip control 42d, which differs from the accelerator grip control 42c shown in Fig. 11, in that the annular members 76a are replaced by an annular member 54c. Therefore, no other description will be made here for the accelerator grip control 42d other than the annular member 54c.

Referring to Fig. 12, the annular member 54c has a contact member 88, a core member 90 and a tightening member 92 which are essentially the same as the contact member 60 (see Fig. 5), the core member 62 (see Fig. 5) and the tightening member 64 (see Fig. 5) of the annular member 54. The inner circumferential portion of the contact member 88 has a right end portion which is in contact with the outer circumferential surface 40a of the handlebar 40 along its entire circumference. The outer circumferential portion of the contact member 84 is in contact with the inner circumferential surface 82c of the large-diameter portion 82b of the collar 82 along its entire circumference.

In the accelerator grip control 42d, the outer circumferential portion of the contact member 88 is pressed onto the inner circumferential surface 82c of the collar 82 by the core member 90 with a sufficient amount of pressure. Thus, it is possible to make a sufficiently large maximum static frictional force between the outer circumferential portion of the contact member 88 and the inner circumferential surface 82c of the collar 82. As a result, it is possible to fix the contact member 88 to the collar 82. It is also possible to sufficiently prevent the inner circumferential portion of the contact member 88 from slipping with respect to the inner circumferential surface 82c of the collar 82.

Also, in its axial direction of the contact member 88, the region of contact between the outer circumferential portion of the contact member 88 and the inner circumferential surface 82c of the collar 82 has a greater width than the width in the region of contact between the inner circumferential portion of the contact member 88 and the outer circumferential surface 40a of the handlebar 40. Therefore, the area of contact between the outer circumferential portion of the contact member 88 and the inner circumferential surface 82c of the collar 82 is greater than the area of contact between the inner circumferential portion of the contact member 88 and the outer circumferential surface 40a of the handlebar 40. Thus, it is possible to make a sufficiently larger maximum static frictional force in the region of contact between the contact member 88 and the collar 82 than a maximum static frictional force in the region of contact between the contact member 88 and the handlebar 40.

In the accelerator grip control 42d which includes the above-described configuration, the accelerator grip member 46, the grip sleeve 44, the collar 82 and the contact member 88 rotate integrally with each other when the rider operates the accelerator grip member 46. During the operation, the inner circumferential portion of the contact member 88 rotates while sliding with respect to the outer circumferential surface 40a of the handlebar 40, so a dynamic frictional force is generated in the region of contact between the inner circumferential portion of the contact member 88 and the outer circumferential surface 40a of the handlebar 40. The dynamic frictional force generated in the region of contact between the inner circumferential portion of the contact member 88 and the outer circumferential surface 40a of the handlebar 40 is applied to the accelerator grip member 46 via the collar 82 and the grip sleeve 44, as a resistance to the rotation.

As described, the accelerator grip control 42d which includes the annular member 54c can, like the accelerator grip control 42 (see Fig. 3) which has the annular members 54 (see Fig. 3), apply the frictional force generated by the annular member 54c (the contact member 88) to the accelerator grip member 46, as a resistance to the rotation. Also, the inner circumferential portion of the contact member 88 is in contact with the outer circumferential surface 40a of the handlebar 40 along its entire circumference. The arrangement thus makes it possible to reduce changes in the dynamic frictional force generated in the region of contact between the contact member 88 and the handlebar 40. As a result, it is possible to reduce changes in the resistance to the rotation of the accelerator grip member 46. Therefore, a motorcycle which includes the accelerator grip control 42d provides the same functions and advantages as offered by the motorcycle 10 which includes the accelerator grip control 42 (see Fig. 3).

It should be noted here that the accelerator grip control 42d described so far is provided with one annular member 54c. However, the number of the annular members 54c is not limited to the embodiment described so far. For example, the accelerator grip control may be provided with two or more annular members 54c.

Also, in the accelerator grip control 42d described thus far, the annular member 54c has the tightening member 92. However, the accelerator grip control may include an annular member which does not have the tightening member.

In the embodiment described above, the annular member is provided inside the case member. However, the annular member may be provided outside of the case member.

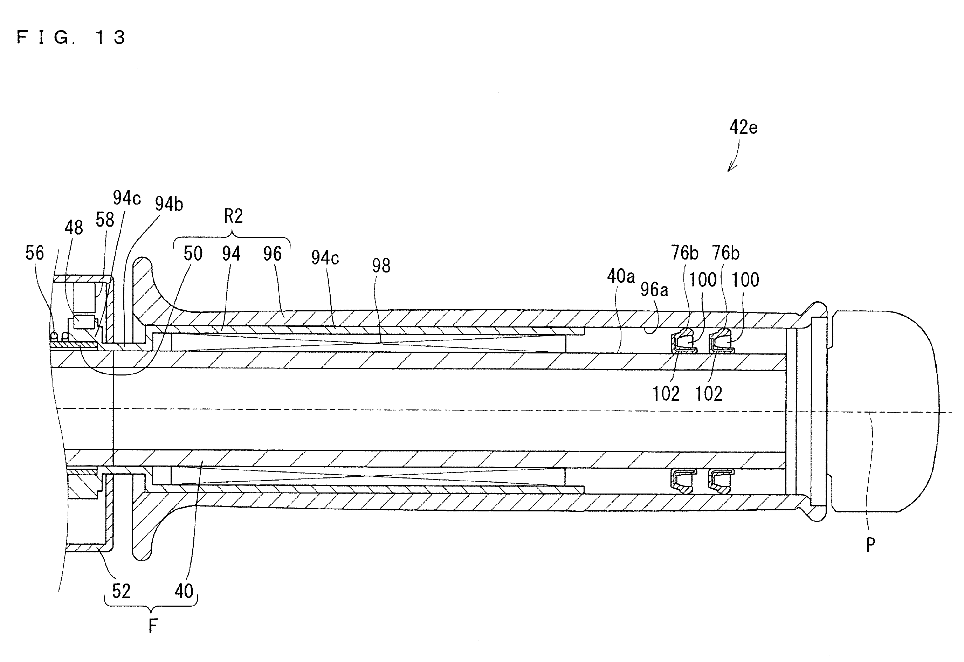

Fig. 13 is an illustrative diagram showing an example of an accelerator grip control in which annular members are provided outside of a case member. Fig. 13 shows an accelerator grip control 42e, which differs from the accelerator grip control 42 in Fig. 3 in that the grip sleeve 44 is replaced by a grip sleeve 94; that the accelerator grip member 46 is replaced by a accelerator grip member 96; that the annular members 54 are replaced by a plurality (two in the present embodiment) of annular members 76b; and that a rolling bearing 98 is provided. Therefore, description hereafter will only be made for the grip sleeve 94, the accelerator grip member 96, the annular members 76b and the rolling bearing 98, with no other description for the rest of the accelerator grip control 42e. It should be noted here that in the present embodiment, the grip sleeve 94, the accelerator grip member 96 and a collar 50 constitute a rotating member R2.

Referring to Fig. 13, the grip sleeve 94 includes a cylindrical large-diameter portion 94a; a small-diameter portion 94b which has a smaller diameter than the large-diameter portion 94a and extend leftward from the large-diameter portion 94a; and an annular flange portion 94c which is provided at a right end portion of the small-diameter portion 94b. The magnet 48 and the collar 50 are fixed to the flange portion 94c.

The rolling bearing 98 is provided between the handlebar 40 and the large-diameter portion 94a of the grip sleeve 94, supporting the grip sleeve 94 rotatably with respect to the handlebar 40. The accelerator grip member 96 is substantially cylindrical, and is fixed to an outer circumferential surface of the large-diameter portion 94a of the grip sleeve 94. With this arrangement, the accelerator grip member 96 is rotatable with respect to the handlebar 40 integrally with the grip sleeve 94.

The annular members 76b are attached to the handlebar 40 axially of the handlebar 40, between the handlebar 40 and the accelerator grip member 96. The annular member 76b has a contact member 100 and a core member 102 like the contact member 78 (see Fig. 10) and the core member 80 (see Fig. 10) of the annular member 76 (see Fig. 10). The inner circumferential portion of the contact member 100 is in contact with the outer circumferential surface 40a of the handlebar 40 along its entire circumference. The outer circumferential portion of the contact member 100 has a right end portion which is in contact with the inner circumferential surface 96a of the accelerator grip member 96 along its entire circumference.

In the accelerator grip control 42e, the inner circumferential portion of the contact member 100 is pressed onto the outer circumferential surface 40a of the handlebar 40 by the core member 102 with a sufficient amount of pressure. Thus, it is possible to make a sufficiently large maximum static frictional force between the inner circumferential portion of the contact member 100 and the outer circumferential surface 40a of the handlebar 40. As a result, it is possible to fix the contact member 100 to the handlebar 40. It is also possible to sufficiently prevent the inner circumferential portion of the contact member 100 from slipping with respect to the outer circumferential surface 40a of the handlebar 40.

Also, in its axial direction of the contact member 100, the region of contact between the inner circumferential portion of the contact member 100 and the outer circumferential surface 40a of the handlebar 40 has a greater width than the width in the region of contact between the outer circumferential portion of the contact member 100 and the inner circumferential surface 96a of the accelerator grip member 96. Therefore, the area of contact between the inner circumferential portion of the contact member 100 and the outer circumferential surface 40a of the handlebar 40 is greater than the area of contact between the outer circumferential portion of the contact member 100 and the inner circumferential surface 96a of the accelerator grip member 96. Thus, it is possible to make a sufficiently larger maximum static frictional force in the region of contact between the contact member 100 and the handlebar 40 than a maximum static frictional force in the region of contact between the contact member 100 and the accelerator grip member 96.

In the accelerator grip control 42e which has the above-described configuration, the accelerator grip member 96 and the grip sleeve 94 rotate integrally with each other when the rider operates the accelerator grip member 96. During the operation, the inner circumferential surface 96a of the accelerator grip member 96 rotates while sliding with respect to the outer circumferential portions of the contact members 100, so a dynamic frictional force is generated in the regions of contact between the inner circumferential surface 96a of the accelerator grip member 96 and the outer circumferential portions of the contact members 100, acting as a resistance to the rotation of the accelerator grip member 96.

As described, the accelerator grip control 42e which includes the annular members 76b outside of the case member 52 can, like the accelerator grip control 42 (see Fig. 3) which includes the annular members 54 (see Fig. 3) inside the case member 52, apply the frictional force generated by the annular members 76b (the contact members 100) to the accelerator grip member 96, as a resistance to the rotation. Also, the outer circumferential portions of the contact members 100 are in contact with the inner circumferential surface 96a of the accelerator grip member 96 along their entire circumferences. The arrangement thus makes it possible to reduce changes in the dynamic frictional force generated in the regions of contact between the contact members 100 and the accelerator grip member 96. As a result, it is possible to reduce changes in the resistance to the rotation of the accelerator grip member 96. Therefore, a motorcycle which includes the accelerator grip control 42e provides the same functions and advantages as offered by the motorcycle 10 which includes the accelerator grip control 42 (see Fig. 3).

It should be noted here that the accelerator grip control 42e described so far is provided with two annular members 76b. However, the number of the annular members 76b is not limited to the embodiment described so far. For example, the accelerator grip control may be provided with one annular member 76b, or three or more annular members 76b.

Also, in the accelerator grip control 42e described so far, the rotating member R2 is constituted by the grip sleeve 94, the accelerator grip member 96 and the collar 50. However, the rotating member may include other members which rotate together with the grip sleeve 94, the accelerator grip member 96 and the collar 50. Also, in the accelerator grip control 42e, the rotating member R2 includes the collar 50. However, it is also acceptable not to provide the collar 50. For example, a cylindrical portion which has the same shape as the collar 50 may be formed to the grip sleeve in place of the collar 50.

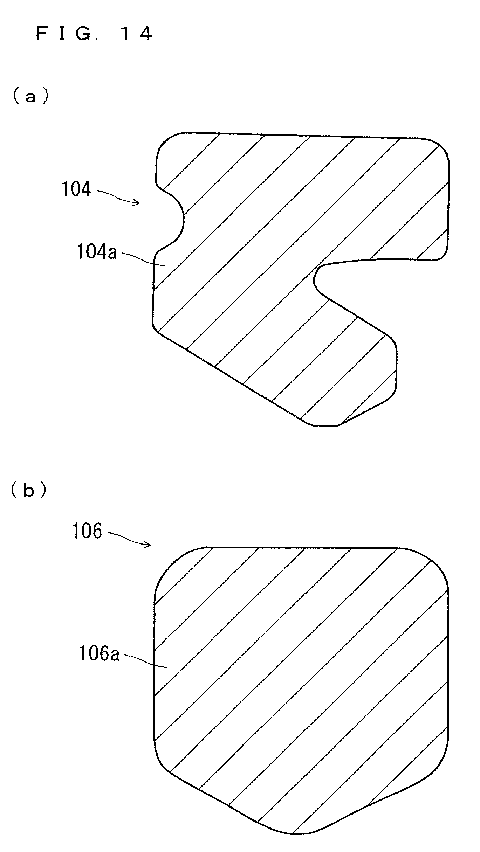

Also, shape of the annular members used in the accelerator grip controls may be changed as appropriately. For example, the accelerator grip control may be provided with an annular member 104 as shown in Fig. 14(a), which is constituted only by a contact member 104a and does not have a core member or a tightening member. Also, the accelerator grip control may be provided with an annular member 106 as shown in Fig. 14 (b), which is provided by a contact member 106a having a generally pentagonal section. It should be noted here that in the section of the annular member 104 shown in Fig. 14(a), it is also acceptable to use the upper side as the outer circumferential portion of the contact member 104a and the lower side as the inner circumferential portion of the contact member 104a. Further, it is acceptable to use the upper side as the inner circumferential portion of the contact member 104a and the lower side as the outer circumferential portion of the contact member 104a. Likewise, in the section of the annular member 106 shown in Fig. 14(b), it is acceptable to use the upper side as the outer circumferential portion of the contact member 106a and the lower side as the inner circumferential portion of the contact member 106a. Further, it is acceptable to use the upper side as the inner circumferential portion of the contact member 106a and the lower side as the outer circumferential portion of the contact member 106a.

Also, saddle type vehicles to which the present invention is applicable are not limited to those motorcycles in the same category as the motorcycle 10. Rather, the present invention is applicable to other kinds of motorcycles such as scooters, mopeds, etc. Also, saddle type vehicles to which the present invention is applicable are not limited to motorcycles. Rather, the present invention is applicable to other kinds of saddle type vehicles such as all-terrain vehicles, snowmobiles and others.

The present invention being thus far described in terms of preferred embodiments, it is obvious that these may be varied in many ways within the scope and the spirit of the present invention. The scope of the present invention is only limited by the accompanied claims.

## Claims

1. A saddle type vehicle comprising:
a fixing member including a handlebar;
a rotating member rotatable around the handlebar, including an accelerator grip member and a support member supporting the accelerator grip member so that the accelerator grip member can rotate with respect to the handlebar;
an accelerator position sensor for outputting electric signals in accordance with rotational positions of the accelerator grip member; and
an annular member as a separate element from the support member, for applying a load based on a frictional force to the rotating member as a resistance to rotation of the rotating member;
wherein the annular member has an outer circumferential portion in contact with one of the fixing member and the rotating member, and the annular member has an inner circumferential portion in contact with the other of the fixing member and the rotating member.

2. The saddle type vehicle according to Claim 1, wherein the annular member includes a contact member in contact with the fixing member and with the rotating member, and a core member buried in the contact member.

3. The saddle type vehicle according to Claim 1, wherein the annular member includes a contact member in contact with the fixing member and with the rotating member, and a tightening member tightening an inner circumferential portion of the contact member.

4. The saddle type vehicle according to Claim 1, wherein
the annular member includes a contact member in contact with the fixing member and with the rotating member, and
the contact member includes a viscoelastic polymer material.

5. The saddle type vehicle according to one of Claims 1 through 4, further comprising a return spring which applies a force for rotating the rotating member in one direction, to the rotating member.

6. The saddle type vehicle according to one of Claims 1 through 5, wherein the support member includes a substantially cylindrical sliding bearing.

7. The saddle type vehicle according to one of Claims 1 through 6, wherein the fixing member includes a case member housing the accelerator position sensor.

8. The saddle type vehicle according to Claim 7, further comprising a supplying member which is provided in the case member and supplies the annular member with the lubricant.

9. The saddle type vehicle according to Claim 8, wherein
a pair of the annular members are in the case member, and
the supplying member is provided between the pair of the annular members.

10. The saddle type vehicle according to one of Claims 7 through 9, wherein the case member has a vent hole for communication between an inside space and an outside space of the case member.
